(19) Europäisches Patentamt
European Patent Office
Office européen des brevets

(11) **EP 1 422 436 B1**

(12) **FASCICULE DE BREVET EUROPEEN**

(45) Date de publication et mention
de la délivrance du brevet:
**26.10.2005 Bulletin 2005/43**

(51) Int Cl.⁷: **F16F 1/10**, F16F 1/02,
G04B 1/14

(21) Numéro de dépôt: **02026147.5**

(22) Date de dépôt: **25.11.2002**

(54) **Ressort spiral de montre et son procédé de fabrication**

Spiraluhrwerkfeder und Verfahren zu deren Herstellung

Spiral watch spring and its method of production

(84) Etats contractants désignés:
**AT BE BG CH CY CZ DE DK EE ES FI FR GB GR
IE IT LI LU MC NL PT SE SK TR**

(43) Date de publication de la demande:
**26.05.2004 Bulletin 2004/22**

(73) Titulaire: **CSEM Centre Suisse d'Electronique et
de Microtechnique SA
2007 Neuchâtel (CH)**

(72) Inventeurs:
• **Bourgeois, Claude
2014 Bôle (CH)**
• **Perret, André
2206 Les Geneveys-sur-Coffrane (CH)**
• **Hoogerwerf, Arnold Christiaan
2036 Cormondréche (CH)**

(74) Mandataire: **Gresset, Jean
GLN
Gresset & Laesser Neuchâtel
Puits-Godet 8A
2000 Neuchâtel (CH)**

(56) Documents cités:
WO-A-02/04836            DE-A- 10 127 733
US-A- 4 922 756

• **PATENT ABSTRACTS OF JAPAN vol. 018, no.
408 (M-1647), 29 juillet 1994 (1994-07-29) & JP 06
117470 A (YOKOGAWA ELECTRIC CORP), 26
avril 1994 (1994-04-26)**
• **PATENT ABSTRACTS OF JAPAN vol. 010, no.
265 (M-515), 10 septembre 1986 (1986-09-10) &
JP 61 088033 A (KYOCERA CORP), 6 mai 1986
(1986-05-06)**
• **PATENT ABSTRACTS OF JAPAN vol. 016, no.
208 (M-1249), 18 mai 1992 (1992-05-18) & JP 04
034226 A (TOSHIBA CORP), 5 février 1992
(1992-02-05)**
• **PATENT ABSTRACTS OF JAPAN vol. 016, no.
501 (C-0996), 16 octobre 1992 (1992-10-16) & JP
04 185698 A (SEIKO EPSON CORP), 2 juillet 1992
(1992-07-02)**

## Description

### Description pour les Etats contractants suivants: AT, BE, BG, CH, CY, CZ, DK, EE, ES, FI, FR, GB, GR, IE, IT, LI, LU, ML, NL, PT, SE, SK, TR

La présente invention se rapporte à l'organe régulateur des pièces d'horlogerie, appelé balancier-spiral. Elle concerne, plus particulièrement, d'une part, un ressort spiral destiné à équiper le balancier d'une pièce d'horlogerie mécanique et, d'autre part, un procédé de fabrication de ce spiral.

L'organe régulateur des montres mécaniques est composé d'un volant d'inertie, appelé balancier et d'un ressort en spirale, appelé spiral ou ressort spiral, fixé par une extrémité sur l'axe du balancier et par l'autre extrémité sur un pont, appelé coq, dans lequel pivote l'axe du balancier.

Le balancier-spiral oscille autour de sa position d'équilibre (ou point mort). Lorsque le balancier quitte cette position, il arme le spiral. Cela crée un couple de rappel qui, lorsque le balancier est libéré, le fait revenir à sa position d'équilibre. Comme il a acquis une certaine vitesse, donc une énergie cinétique, il dépasse son point mort jusqu'à ce que le couple contraire du spiral l'arrête et l'oblige à tourner dans l'autre sens. Ainsi, le spiral régule la période d'oscillation du balancier.

Plus précisément, le ressort spiral équipant, à ce jour, les mouvements de montres mécaniques est une lame métallique élastique de section rectangulaire enroulée sur elle-même en spirale d'Archimède et comportant de 12 à 15 tours. On rappellera que le spiral est principalement caractérisé par son couple de rappel M, exprimé en première approximation par la formule:

$$M = E/L \ (w^3 \cdot t/12 \cdot \varphi)$$

avec :

- E : module d'Young de la lame [N/m$^2$],
- t : épaisseur du spiral,
- w : largeur du spiral,
- L : longueur du spiral,
- $\varphi$ : angle de torsion (rotation du pivot)

On comprendra aisément que la constante de rappel ou rigidité d'un spiral

$$C = M/\varphi,$$

qui caractérise le couple de rappel par unité d'angle de torsion, doit être le plus constant possible, quels que soient, notamment, la température et le champ magnétique. La matière utilisée a donc une importance primordiale.

Actuellement, on utilise des alliages complexes, tant par le nombre des composants (fer, carbone, nickel, chrome, tungstène, molybdène, béryllium, niobium...) que par les procédés métallurgiques utilisés. Le but recherché est d'obtenir une autocompensation des variations du module d'élasticité du métal en combinant deux influences contraires: celle de la température et celle de la magnétoconstriction (contraction des corps magnétiques sous l'effet de l'aimantation).

Les spiraux métalliques actuels sont difficiles à fabriquer. Tout d'abord, en raison de la complexité des procédés utilisés pour réaliser les alliages, les propriétés mécaniques intrinsèques du métal ne sont pas constantes d'une production à l'autre. Ensuite, le réglage, qui est la technique permettant de faire en sorte que la montre indique en tout temps l'heure la plus juste, est fastidieux et long. Cette opération nécessite de nombreuses interventions manuelles et beaucoup de pièces défectueuses doivent être éliminées. Pour ces raisons, la production est coûteuse et le maintien d'une qualité constante est un défi permanent.

Le document JP-A-06117470 est connu par ailleurs. Il décrit un ressort en forme de spiral, réalisé en silicium monocristallin. Il est dimensionné de manière à avoir une constante de rappel constante, pour fournir un appareil de mesure électrique de grande précision. Toutefois, ce document est muet quant à la stabilité thermique de la constante de rappel de ce ressort. Il ne peut donc être utilisé directement comme ressort spiral dans une pièce d'horlogerie.

La présente invention a pour but de pallier ces inconvénients en proposant un spiral dont la sensibilité aux variations thermiques et aux champs magnétiques est minimisée. De plus, grâce à des techniques de fabrication assurant une parfaite reproductibilité, la qualité des spiraux fournis ne fluctue pas.

De façon plus précise, l'invention concerne un ressort spiral destiné à équiper le balancier d'une pièce d'horlogerie mécanique et formé d'un barreau en spirale issu du découpage d'une plaque {001} de silicium monocristallin présentant des premier (C1) et deuxième (C2) coefficients thermiques de sa constante de rappel C, les spires dudit ressort spiral ayant une largeur w et une épaisseur t.

Selon l'invention, ce barreau comporte une âme en silicium et une couche externe d'épaisseur $\xi$ formée autour de l'âme en silicium et constituée d'un matériau présentant un premier coefficient thermique du module d'Young de signe opposé à celui du silicium.

De façon avantageuse, ladite couche externe (14) est réalisée en oxyde de silicium (SiO$_2$) amorphe.

Le rapport dimensionnel $\xi/w$ est défini de manière à obtenir un premier coefficient thermique (C1) de sa constante de rappel C de valeur prédéterminée ou minimisé.

De préférence, la couche externe est réalisée en oxyde de silicium (SiO$_2$) amorphe. Son épaisseur est d'environ 6% de la largeur w du barreau.

Pour minimiser le deuxième coefficient thermi-

que ($C_2$), la largeur w du barreau est modulée de façon périodique en fonction de l'angle 9 définissant l'orientation de chacun de ses points en coordonnées polaires. La modulation peut aussi, avantageusement, être réalisée de manière à ce que la rigidité locale à la flexion du barreau soit constante.

Afin d'optimiser le comportement thermique du ressort spiral, l'épaisseur t du barreau, sa largeur w, modulée dans le plan du spiral, et l'épaisseur de la couche d'oxyde de silicium ξ ont des valeurs pour lesquelles la dérive thermique de la constante de rappel C est minimale dans un domaine de température donné.

L'invention concerne également un procédé pour déterminer les dimensions optimales du ressort spiral qui vient d'être défini. Ce procédé consiste, successivement, à :

- exprimer mathématiquement la rigidité du spiral en fonction de son épaisseur t, de sa largeur w, modulée dans le plan du spiral, de l'épaisseur ξ de la couche d'oxyde de silicium, de l'anisotropie élastique du silicium et de la température;
- calculer le comportement thermique, en particulier les deux premiers coefficients thermiques de la constante de rappel du ressort spiral ($C_1$ et $C_2$), pour toutes les combinaisons de valeurs possibles des paramètres t, w, ξ dans un domaine de température donné; et
- retenir les combinaisons t, w, ξ pour lesquelles les dérivées thermiques de ces coefficients sont minimales.

L'invention sera mieux comprise à la lecture de la description qui va suivre, faite en regard du dessin annexé sur lequel :

- la figure 1 représente un ressort spiral selon l'invention ;
- la figure 2 montre un segment de ce spiral, en coupe longitudinale en <u>a</u> et en coupe transversale en <u>b</u>, de manière à illustrer les références des paramètres utiles à la description ; et
- la figure 3 illustre l'anisotropie du module d'Young dans le plan {001} du silicium.

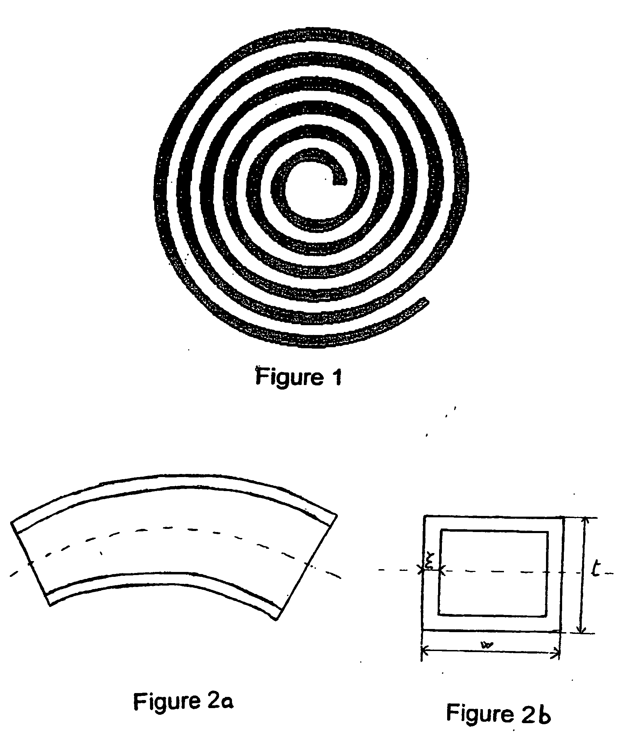

Le spiral selon l'invention, représenté en 10 sur les figures 1 et 2, est un barreau découpé en spirale issu de l'usinage, par exemple par plasma, d'une plaque {001} de silicium monocristallin. Ce matériau est amagnétique et conformable à volonté, et permet des coûts de fabrication faibles.

Malheureusement, on remarque qu'il est difficile d'obtenir un ressort spiral en silicium à constante de rappel C constante car le module d'Young E de ce barreau est fortement influencé par la température. Il est donc indispensable de compenser cet effet.

Lorsqu'on modélise la sensibilité à la température d'une structure élastique, il est d'usage de faire intervenir les coefficients thermiques de sa constante de rappel C, tels qu'ils apparaissent dans une série mathématique du type :

$$C = C_0(1 + C_1\Delta T + C_2\Delta T^2...),$$

dans laquelle $C_0$ est la valeur nominale de la constante de rappel C et $C_1$ et $C_2$ sont, respectivement, ses premier et deuxième coefficients thermiques. Seuls les deux premiers coefficients sont pris en compte ici, les suivants étant négligeables.

On comprendra donc que, pour obtenir une constante de rappel C peu sensible à la température, on cherche à minimiser les coefficients thermiques $C_1$ et de $C_2$.

Il faut rappeler que le silicium monocristallin présente une anisotropie cristalline. Dans le plan {001}, la direction <110> est plus rigide que la direction <100>, ce qui, bien sûr, influence la rigidité en flexion du spiral 10.

Le module d'Young $E^{(a)}$ du plan {001} du silicium peut s'exprimer, à l'instar de la constante de rappel, par une série mathématique du type :

$$E^{(a)} = E_0^{(a)} (1 + E_1^{(a)}\Delta T + E_2^{(a)}\Delta T^2),$$

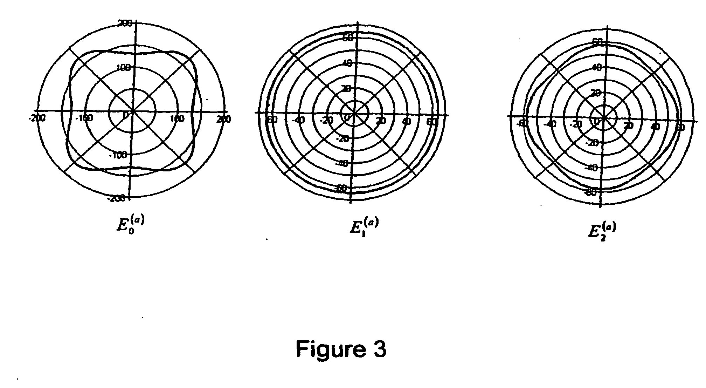

dans laquelle $E_0^{(a)}$ est la valeur nominale du module d'Young $E^{(a)}$ et $E_1^{(a)}$ et $E_2^{(a)}$ sont, respectivement, ses premier et deuxième coefficients thermiques. Ces trois coefficients sont particulièrement représentés sur la figure 3 en fonction de l'orientation par rapport aux axes cristallographiques.

Le premier coefficient thermique $E_1^{(a)}$ du module d'Young est fortement négatif (- 60 ppm/°C environ) et la valeur nominale du module d'Young $E_0^{(a)}$ est de 148 GPa dans la direction <100> du plan {001}. La dérive thermique d'un ressort spiral en silicium est ainsi d'environ 155 secondes/jour dans le domaine horloger 23°±15°C. Cela le rend incompatible avec les exigences horlogères qui sont de l'ordre de 8 secondes/jour.

Pour compenser cette dérive, le spiral 10 selon l'invention est constitué d'une âme en silicium 12 et d'une couche extérieure 14 en SiO₂, dont le premier coefficient thermique $E_1^{(b)}$ est fortement positif. Il est d'environ +215 ppm/°C et la valeur nominale de la rigidité $E_0^{(b)}$ est d'environ 72.4 Gpa.

Cette structure trilame symétrique, obtenue par oxydation thermique selon tout procédé connu, permet ainsi d'agir sur la stabilité thermique de la rigidité globale du spiral en flexion planaire.

On peut montrer que, pour un spiral découpé dans le plan {001}, il y a une minimisation optimale du premier coefficient thermique $C_1$ de la constante de rappel du spiral lorsque l'épaisseur de la couche d'oxyde 14 représente environ 6% de la largeur du ressort spiral.

Selon l'invention, le deuxième coefficient ther-

mique $C_2$ peut être minimisé par la modulation de la largeur w du spiral, qui est la dimension située dans son plan d'enroulement, en fonction de l'angle θ qui caractérise l'orientation de chacun de ses points en coordonnées polaires.

Comme le montre la figure 1, la modulation peut être réalisée en rendant le spiral plus mince dans la direction rigide <110> et plus épais dans la direction moins rigide <100>. Il est ainsi possible de compenser l'anisotropie du silicium et d'obtenir une rigidité locale à la flexion constante. Le spiral est alors dit équilibré élastiquement.

Dans ce cas particulier, si on appelle $w_0$ une largeur de référence du spiral dans le plan {001}, la largeur w varie en fonction de l'angle θ selon la relation :

$$w = w_0 \sqrt[3]{1 - \frac{1 - \frac{\overline{s}_{12.0}}{\overline{s}_{11.0}} - \frac{1}{2}\frac{\overline{s}_{44.0}}{\overline{s}_{11.0}}}{2} \sin^2(2\theta)}, \qquad [m]$$

dans laquelle $\overline{s}_{11}$ $\overline{s}_{44}$ $\overline{s}_{12}$ sont les trois coefficients élastiques indépendants du silicium dans les axes cristallographiques, connus de l'homme de métier, tels que définis dans la publication de C. Bourgeois et Al. « Design of resonators for the Determination of the Temperature Coefficients of Elastic Constants of Monocrystalline Silicon » (Proc. 51th Annual Frequency Control Symposium, 1997, 791-799).

Plus concrètement, on comprend aisément que plusieurs paramètres interviennent de façon interdépendante et que, par exemple, l'amélioration du comportement thermique obtenue avec une certaine modulation de la largeur w ne sera pas identique pour toutes les épaisseurs d'oxyde et pour toutes les orientations cristallines du spiral.

Pour faciliter la détermination des valeurs optimales des différents paramètres, le procédé selon l'invention consiste à examiner, par exemple, la variabilité des coefficients thermiques de la constante de rappel C d'un spiral tel que décrit ci-dessus, en fonction de ces paramètres.

Les paramètres impliqués dans la détermination de C sont le module d'Young $E^{(a)}$ du silicium, le module d'Young $E^{(b)}$ de l'oxyde de silicium et les grandeurs géométriques illustrées sur la figure 2 :

- t = épaisseur du spiral (constante) [m]
- w = largeur du spiral dans le plan {001} [m]
- ξ = épaisseur de l'oxyde (constante) [m]

D'après la théorie des multilames, le module d'Young E équivalent en flexion d'un barreau de silicium recouvert d'une couche d'oxyde de silicium peut être modélisé dans une section locale selon la relation suivante :

$$E = \left(E^{(a)} - E^{(b)}\right)\left(1 - \frac{2\xi}{w}\right)^3\left(1 - \frac{2\xi}{t}\right) + E^{(b)}$$

Comme, dans le cas du spiral 10, $\frac{\xi}{w} \ll 1$ et $\frac{\xi}{t} \ll 1$, l'équation devient :

$$E = E^{(a)} - \left(E^{(a)} - E^{(b)}\right)\left(\frac{6\xi}{w} + \frac{2\xi}{t}\right)$$

La constante de rappel C du ressort spiral et ses deux premiers coefficients thermiques $C_1$ et $C_2$ sont déterminés par intégration, sur toute sa longueur, de l'expression de la rigidité locale, elle-même fonction des expressions de E, t, w et ξ.

On peut montrer alors que le premier coefficient thermique $C_1$ est essentiellement fonction de ξ, tandis que le deuxième coefficient thermique $C_2$ dépend surtout de w.

Ensuite, il ne reste plus qu'à calculer, au moyen d'un ordinateur, les valeurs des coefficients thermiques $C_1$ et $C_2$ pour toutes les combinaisons de valeurs possibles des paramètres t, w, ξ. Les triplets t, w, ξ pour lesquels la dérive thermique de la constante de rappel C du ressort spiral est minimum dans un intervalle de température donné, sont extraits de l'ensemble des combinaisons possibles.

On peut alors choisir le triplet correspondant au spiral dont la constante de rappel C, déterminée à l'aide de la formule déjà donnée, est la mieux adaptée à l'application horlogère souhaitée.

Le spiral peut enfin être réalisé selon les indications fournies par le calcul.

Ainsi est proposé un spiral en silicium dont la sensibilité à la température est réduite au minimum. Il est prêt à être utilisé et ne nécessite aucun réglage, ni opération manuelle particulière.

La description qui précède n'est qu'un exemple particulier et non restrictif d'un spiral à base de silicium selon l'invention. Ainsi, la seule compensation thermique fournie par la couche d'oxyde est déjà satisfaisante en vue d'une utilisation dans des montres de gamme moyenne et la modulation de la largeur w est facultative.

**Description pour l'Etat contractant suivant : DE**

La présente invention se rapporte à l'organe régulateur des pièces d'horlogerie, appelé balancier-spiral. Elle concerne, plus particulièrement, d'une part, un ressort spiral destiné à équiper le balancier d'une pièce d'horlogerie mécanique et, d'autre part, un procédé de fabrication de ce spiral.

Se référant à la demande antérieure DE-A-101 27 733 déposée le 7 juin 2001, le demandeur a, de sa propre initiative, limité la portée de la présente demande et présenté des revendications séparées pour l'Allemagne.

L'organe régulateur des montres mécaniques est composé d'un volant d'inertie, appelé balancier et d'un ressort en spirale, appelé spiral ou ressort spiral, fixé par une extrémité sur l'axe du balancier et par l'autre extrémité sur un pont, appelé coq, dans lequel pivote l'axe du balancier.

Le balancier-spiral oscille autour de sa position d'équilibre (ou point mort). Lorsque le balancier quitte cette position, il arme le spiral. Cela crée un couple de rappel qui, lorsque le balancier est libéré, le fait revenir à sa position d'équilibre. Comme il a acquis une certaine vitesse, donc une énergie cinétique, il dépasse son point mort jusqu'à ce que le couple contraire du spiral l'arrête et l'oblige à tourner dans l'autre sens. Ainsi, le spiral régule la période d'oscillation du balancier.

Plus précisément, le ressort spiral équipant, à ce jour, les mouvements de montres mécaniques est une lame métallique élastique de section rectangulaire enroulée sur elle-même en spirale d'Archimède et comportant de 12 à 15 tours. On rappellera que le spiral est principalement caractérisé par son couple de rappel M, exprimé en première approximation par la formule:

$$M = E/L \ (w^3 \cdot t/12 \cdot \varphi)$$

avec:

- E : module d'Young de la lame [N/m$^2$],
- t : épaisseur du spiral,
- w : largeur du spiral,
- L : longueur du spiral,
- $\varphi$ : angle de torsion (rotation du pivot)

On comprendra aisément que la constante de rappel ou rigidité d'un spiral

$$C = M/\varphi,$$

qui caractérise le couple de rappel par unité d'angle de torsion, doit être le plus constant possible, quels que soient, notamment, la température et le champ magnétique. La matière utilisée a donc une importance primordiale.

Actuellement, on utilise des alliages complexes, tant par le nombre des composants (fer, carbone, nickel, chrome, tungstène, molybdène, béryllium, niobium...) que par les procédés métallurgiques utilisés. Le but recherché est d'obtenir une autocompensation des variations du module d'élasticité du métal en combinant deux influences contraires: celle de la température et celle de la magnétoconstriction (contraction des corps magnétiques sous l'effet de l'aimantation).

Les spiraux métalliques actuels sont difficiles à fabriquer. Tout d'abord, en raison de la complexité des procédés utilisés pour réaliser les alliages, les propriétés mécaniques intrinsèques du métal ne sont pas constantes d'une production à l'autre. Ensuite, le réglage, qui est la technique permettant de faire en sorte que la montre indique en tout temps l'heure la plus juste, est fastidieux et long. Cette opération nécessite de nombreuses interventions manuelles et beaucoup de pièces défectueuses doivent être éliminées. Pour ces raisons, la production est coûteuse et le maintien d'une qualité constante est un défi permanent.

Le document JP-A-06117470 est connu par ailleurs. Il décrit un ressort en forme de spiral, réalisé en silicium monocristallin. Il est dimensionné de manière à avoir une constante de rappel constante, pour fournir un appareil de mesure électrique de grande précision. Toutefois, ce document est muet quant à la stabilité thermique de la constante de rappel de ce ressort. Il ne peut donc être utilisé directement comme ressort spiral dans une pièce d'horlogerie.

La présente invention a pour but de pallier ces inconvénients en proposant un spiral dont la sensibilité aux variations thermiques et aux champs magnétiques est minimisée. De plus, grâce à des techniques de fabrication assurant une parfaite reproductibilité, la qualité des spiraux fournis ne fluctue pas.

De façon plus précise, l'invention concerne un ressort spiral destiné à équiper le balancier d'une pièce d'horlogerie mécanique et formé d'un barreau en spirale, dont les spires ont une largeur w et une épaisseur t. Ce barreau comporte une âme en silicium et une couche externe d'épaisseur $\xi$ formée autour de l'âme en silicium et constituée d'un matériau présentant un premier coefficient thermique du module d'Young de signe opposé à celui du silicium.

Selon l'invention, le rapport dimensionnel $\xi$/w est défini de manière à obtenir un premier coefficient thermique (C1) de sa constante de rappel C de valeur prédéterminée.

Avantageusement, la couche externe est réalisée en oxyde de silicium (SiO$_2$) amorphe.

Le rapport dimensionnel $\xi$/w est défini de manière à minimiser le premier coefficient thermique (C1) de sa constante de rappel C. De manière préférée, ce rapport $\xi$/w est d'environ 6% de la largeur w du barreau .

Pour minimiser le deuxième coefficient thermique (C$_2$), la largeur w du barreau est modulée de façon périodique en fonction de l'angle $\theta$ définissant l'orientation de chacun de ses points en coordonnées polaires. La modulation peut aussi, avantageusement, être réalisée de manière à ce que la rigidité locale à la flexion du barreau soit constante.

Afin d'optimiser le comportement thermique du ressort spiral, l'épaisseur t du barreau, sa largeur w, modulée dans le plan du spiral, et l'épaisseur de la couche d'oxyde de silicium $\xi$ ont des valeurs pour lesquelles la dérive thermique de la constante de rappel C est minimale dans un domaine de température donné.

L'invention concerne également un procédé pour déterminer les dimensions optimales du ressort spiral qui vient d'être défini. Ce procédé consiste, successivement, à :

-   exprimer mathématiquement la rigidité du spiral en fonction de son épaisseur t, de sa largeur w, modulée dans le plan du spiral, de l'épaisseur ξ de la couche d'oxyde de silicium, de l'anisotropie élastique du silicium et de la température;
-   calculer le comportement thermique, en particulier les deux premiers coefficients thermiques de la constante de rappel du ressort spiral ($C_1$ et $C_2$), pour toutes les combinaisons de valeurs possibles des paramètres t, w, ξ dans un domaine de température donné; et
-   retenir les combinaisons t, w, ξ pour lesquelles les dérivées thermiques de ces coefficients sont minimales.

L'invention sera mieux comprise à la lecture de la description qui va suivre, faite en regard du dessin annexé sur lequel :

-   la figure 1 représente un ressort spiral selon l'invention ;
-   la figure 2 montre un segment de ce spiral, en coupe longitudinale en <u>a</u> et en coupe transversale en <u>b</u>, de manière à illustrer les références des paramètres utiles à la description ; et
-   la figure 3 illustre l'anisotropie du module d'Young dans le plan {001} du silicium.

Le spiral selon l'invention, représenté en 10 sur les figures 1 et 2, est un barreau découpé en spirale issu de l'usinage, par exemple par plasma, d'une plaque {001} de silicium monocristallin. Ce matériau est amagnétique et conformable à volonté, et permet des coûts de fabrication faibles.

Malheureusement, on remarque qu'il est difficile d'obtenir un ressort spiral en silicium à constante de rappel C constante car le module d'Young E de ce barreau est fortement influencé par la température. Il est donc indispensable de compenser cet effet.

Lorsqu'on modélise la sensibilité à la température d'une structure élastique, il est d'usage de faire intervenir les coefficients thermiques de sa constante de rappel C, tels qu'ils apparaissent dans une série mathématique du type :

$$C = C_0(1 + C_1 \Delta T + C_2 \Delta T^2 ...),$$

dans laquelle $C_0$ est la valeur nominale de la constante de rappel C et $C_1$ et $C_2$ sont, respectivement, ses premier et deuxième coefficients thermiques. Seuls les deux premiers coefficients sont pris en compte ici, les suivants étant négligeables.

On comprendra donc que, pour obtenir une constante de rappel C peu sensible à la température, on cherche à minimiser les coefficients thermiques $C_1$ et de $C_2$.

Il faut rappeler que le silicium monocristallin présente une anisotropie cristalline. Dans le plan {001}, la direction <110> est plus rigide que la direction <100>, ce qui, bien sûr, influence la rigidité en flexion du spiral 10.

Le module d'Young $E^{(a)}$ du plan {001} du silicium peut s'exprimer, à l'instar de la constante de rappel, par une série mathématique du type :

$$E^{(a)} = E_0^{(a)} (1 + E_1^{(a)} \Delta T + E_2^{(a)} \Delta T^2),$$

dans laquelle $E_0^{(a)}$ est la valeur nominale du module d'Young $E^{(a)}$ et $E_1^{(a)}$ et $E_2^{(a)}$ sont, respectivement, ses premier et deuxième coefficients thermiques. Ces trois coefficients sont particulièrement représentés sur la figure 3 en fonction de l'orientation par rapport aux axes cristallographiques.

Le premier coefficient thermique $E_1^{(a)}$ du module d'Young est fortement négatif (- 60 ppm/°C environ) et la valeur nominale du module d'Young $E_0^{(a)}$ est de 148 GPa dans la direction <100> du plan {001}. La dérive thermique d'un ressort spiral en silicium est ainsi d'environ 155 secondes/jour dans le domaine horloger 23°±15°C. Cela le rend incompatible avec les exigences horlogères qui sont de l'ordre de 8 secondes/jour.

Pour compenser cette dérive, le spiral 10 selon l'invention est constitué d'une âme en silicium 12 et d'une couche extérieure 14 en $SiO_2$, dont le premier coefficient thermique $E_1^{(b)}$ est fortement positif. Il est d'environ +215 ppm/°C et la valeur nominale de la rigidité $E_0^{(b)}$ est d'environ 72.4 Gpa.

Cette structure trilame symétrique, obtenue par oxydation thermique selon tout procédé connu, permet ainsi d'agir sur la stabilité thermique de la rigidité globale du spiral en flexion planaire.

On peut montrer que, pour un spiral découpé dans le plan {001}, il y a une minimisation optimale du premier coefficient thermique $C_1$ de la constante de rappel du spiral lorsque l'épaisseur de la couche d'oxyde 14 représente environ 6% de la largeur du ressort spiral.

Selon l'invention, le deuxième coefficient thermique $C_2$ peut être minimisé par la modulation de la largeur w du spiral, qui est la dimension située dans son plan d'enroulement, en fonction de l'angle qui caractérise l'orientation de chacun de ses points en coordonnées polaires.

Comme le montre la figure 1, la modulation peut être réalisée en rendant le spiral plus mince dans la direction rigide <110> et plus épais dans la direction moins rigide <100>. Il est ainsi possible de compenser l'anisotropie du silicium et d'obtenir une rigidité locale à la flexion constante. Le spiral est alors dit équilibré élastiquement.

Dans ce cas particulier, si on appelle $w_0$ une largeur de référence du spiral dans le plan {001}, la largeur w varie en fonction de l'angle θ selon la relation :

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}, \qquad [m]$$

dans laquelle $\bar{s}_{11}$ $\bar{s}_{44}$ $\bar{s}_{12}$ sont les trois coefficients élastiques indépendants du silicium dans les axes cristallographiques, connus de l'homme de métier, tels que définis dans la publication de C. Bourgeois et Al. « Design of resonators for the Determination of the Temperature Coefficients of Elastic Constants of Monocrystalline Silicon » (Proc. 51th Annual Frequency Control Symposium, 1997, 791-799).

Plus concrètement, on comprend aisément que plusieurs paramètres interviennent de façon interdépendante et que, par exemple, l'amélioration du comportement thermique obtenue avec une certaine modulation de la largeur w ne sera pas identique pour toutes les épaisseurs d'oxyde et pour toutes les orientations cristallines du spiral.

Pour faciliter la détermination des valeurs optimales des différents paramètres, le procédé selon l'invention consiste à examiner, par exemple, la variabilité des coefficients thermiques de la constante de rappel C d'un spiral tel que décrit ci-dessus, en fonction de ces paramètres.

Les paramètres impliqués dans la détermination de C sont le module d'Young $E^{(a)}$ du silicium, le module d'Young $E^{(b)}$ de l'oxyde de silicium et les grandeurs géométriques illustrées sur la figure 2 :

- t = épaisseur du spiral (constante)        [m]
- w = largeur du spiral dans le plan {001}        [m]
- ξ = épaisseur de l'oxyde (constante)        [m]

D'après la théorie des multilames, le module d'Young E équivalent en flexion d'un barreau de silicium recouvert d'une couche d'oxyde de silicium peut être modélisé dans une section locale selon la relation suivante :

$$E = \left(E^{(a)} - E^{(b)}\right)\left(1 - \frac{2\xi}{w}\right)^3\left(1 - \frac{2\xi}{t}\right) + E^{(b)}$$

Comme, dans le cas du spiral 10, $\frac{\xi}{w} \ll 1$ et $\frac{\xi}{t} \ll 1$, l'équation devisent :

$$E = E^{(a)} - \left(E^{(a)} - E^{(b)}\right)\left(\frac{6\xi}{w} + \frac{2\xi}{t}\right)$$

La constante de rappel C du ressort spiral et ses deux premiers coefficients thermiques $C_1$ et $C_2$ sont déterminés par intégration, sur toute sa longueur, de l'expression de la rigidité locale, elle-même fonction des expressions de E, t, w et ξ.

On peut montrer alors que le premier coefficient thermique $C_1$ est essentiellement fonction de ξ, tandis que le deuxième coefficient thermique $C_2$ dépend surtout de w.

Ensuite, il ne reste plus qu'à calculer, au moyen d'un ordinateur, les valeurs des coefficients thermiques $C_1$ et $C_2$ pour toutes les combinaisons de valeurs possibles des paramètres t, w, ξ. Les triplets t, w, ξ pour lesquels la dérive thermique de la constante de rappel C du ressort spiral est minimum dans un intervalle de température donné, sont extraits de l'ensemble des combinaisons possibles.

On peut alors choisir le triplet correspondant au spiral dont la constante de rappel C, déterminée à l'aide de la formule déjà donnée, est la mieux adaptée à l'application horlogère souhaitée.

Le spiral peut enfin être réalisé selon les indications fournies par le calcul.

Ainsi est proposé un spiral en silicium dont la sensibilité à la température est réduite au minimum. Il est prêt à être utilisé et ne nécessite aucun réglage, ni opération manuelle particulière.

La description qui précède n'est qu'un exemple particulier et non restrictif d'un spiral à base de silicium selon l'invention. Ainsi, la seule compensation thermique fournie par la couche d'oxyde est déjà satisfaisante en vue d'une utilisation dans des montres de gamme moyenne et la modulation de la largeur w est facultative.

**Revendications**

**Revendications pour les Etats contractants suivants : AT, BE, BG, CH, CY, CZ, DK, EE, ES, FI, FR, GB, GR, IE, IT, LI, LU, ML, NL, PT, SE, SK, TR**

1.  Ressort spiral destiné à équiper le balancier d'une pièce d'horlogerie mécanique et formé d'un barreau (10) en spirale issu du découpage d'une plaque {001} de silicium monocristallin présentant des premier (C1) et deuxième (C2) coefficients thermiques de sa constante de rappel C, les spires dudit ressort spiral ayant une largeur w et une épaisseur t, **caractérisé en ce que** ledit barreau comporte une âme (12) en silicium et une couche externe (14) d'épaisseur ξ formée autour de l'âme en silicium et constituée d'un matériau présentant un premier coefficient thermique du module d'Young de signe opposé à celui du silicium.

2.  Ressort spiral selon la revendication 1, **caractérisé**

**en ce que** ladite couche externe (14) est réalisée en oxyde de silicium ($SiO_2$) amorphe.

3. Ressort spiral selon l'une des revendications 1 et 2, **caractérisé en ce que** le rapport dimensionnel $\xi/w$ est défini de manière à obtenir un premier coefficient thermique (C1) de sa constante de rappel C de valeur prédéterminée.

4. Ressort spiral selon l'une des revendications 1 à 3, **caractérisé en ce que** le rapport dimensionnel $\xi/w$ est défini de manière à minimiser le premier coefficient thermique (C1) de sa constante de rappel C

5. Ressort spiral selon la revendication 4 **caractérisé en ce que** le rapport dimensionnel $\xi/w$ est d'environ 0,06.

6. Ressort spiral selon l'une des revendications 1 à 5 **caractérisé en ce que** la largeur dudit barreau est modulée, de façon périodique, en fonction de l'angle $\theta$ définissant l'orientation de chacun de ses points en coordonnées polaires pour minimiser le deuxième coefficient thermique ($C_2$).

7. Ressort spiral selon l'une des revendications 1 à 5 **caractérisé en ce que** la largeur dudit barreau est modulée de manière à ce que sa rigidité locale à la flexion soit constante pour minimiser le deuxième coefficient thermique ($C_2$).

8. Ressort spiral selon la revendication 7 **caractérisé en ce que** la modulation est effectuée selon la formule :

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

dans laquelle $\bar{s}_{11}$ $\bar{s}_{44}$ $\bar{s}_{12}$ sont les trois coefficients élastiques indépendants du silicium dans les axes cristallographiques.

9. Ressort spiral selon la revendication 6, **caractérisé en ce que**, pour minimiser les premier (C1) et deuxième (C2) coefficients thermiques, l'épaisseur t du barreau, sa largeur w dans le plan {100} et l'épaisseur $\xi$ de la couche d'oxyde de silicium ont des valeurs pour lesquelles la dérive thermique de la constante de rappel C du ressort spiral est minimum dans un intervalle de température donné.

10. Procédé pour déterminer les dimensions optimales du ressort spiral selon la revendication 9, **caractérisé en ce qu'**il consiste, successivement, à :

   - exprimer mathématiquement la rigidité du spiral en fonction de son épaisseur t, de sa largeur w modulée dans le plan du spiral, de l'épaisseur $\xi$ de la couche d'oxyde de silicium, de l'anisotropie élastique du silicium et de la température;

   - calculer le comportement thermique, en particulier les deux premiers coefficients ($C_1$, $C_2$) de la constante de rappel du ressort spiral pour toutes les combinaisons de valeurs possibles des paramètres t, w, $\xi$, dans un domaine de température donné; et

   - retenir les combinaisons t, w, $\xi$ pour lesquelles les dérivées thermiques desdits coefficients ($C_1$ et $C_2$) sont minimales.

11. Procédé selon la revendication 10, **caractérisé en ce qu'**il consiste, finalement, à calculer la largeur w du spiral en tout point par la formule :

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

dans laquelle $\bar{s}_{11}$ $\bar{s}_{44}$ $\bar{s}_{12}$ sont les trois coefficients élastiques indépendants du silicium dans les axes cristallographiques.

## Revendications pour l'Etat contractant suivant: DE

1. Ressort spiral destiné à équiper le balancier d'une pièce d'horlogerie mécanique et formé d'un barreau (10) en spirale issu du découpage d'une plaque {001} de silicium monocristallin présentant des premier ($C_1$) et deuxième ($C_2$) coefficients thermiques de sa constante de rappel C, les spires dudit ressort spiral ayant une largeur w et une épaisseur t, ledit barreau comportant une âme (12) en silicium et une couche externe (14) d'épaisseur $\xi$ formée autour de l'âme en silicium et constituée d'un matériau présentant un premier coefficient thermique du module d'Young de signe opposé à celui du silicium, **caractérisé en ce que** le rapport dimensionnel $\xi/w$ est défini de manière à obtenir un premier coefficient thermique (C1) de sa constante de rappel C de valeur prédéterminée.

2. Ressort spiral selon la revendication 1, **caractérisé en ce que** ladite couche externe (14) est réalisée en oxyde de silicium ($SiO_2$) amorphe.

3. Ressort spiral selon l'une des revendications 1 et 2, **caractérisé en ce que** le rapport dimensionnel $\xi/w$ est défini de manière à minimiser le premier coefficient thermique (C1) de sa constante de rappel C

4. Ressort spiral selon la revendication 3, **caractérisé**

**en ce que** le rapport dimensionnel $\xi/w$ est d'environ 0,06.

5. Ressort spiral selon l'une des revendications 1 à 4, **caractérisé en ce que** la largeur dudit barreau est modulée, de façon périodique, en fonction de l'angle $\theta$ définissant l'orientation de chacun de ses points en coordonnées polaires pour minimiser le deuxième coefficient thermique ($C_2$).

6. Ressort spiral selon l'une des revendications 1 à 4, **caractérisé en ce que** la largeur dudit barreau est modulée de manière à ce que sa rigidité locale à la flexion soit constante pour minimiser le deuxième coefficient thermique ($C_2$).

7. Ressort spiral selon la revendication 6, **caractérisé en ce que** la modulation de largeur est effectuée selon la formule :

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

dans laquelle $\bar{s}_{11}$ $\bar{s}_{44}$ $\bar{s}_{12}$ sont les trois coefficients élastiques indépendants du silicium dans les axes cristallographiques.

8. Ressort spiral selon la revendication 5, **caractérisé en ce que**, pour minimiser les premier ($C_1$) et deuxième ($C_2$) coefficients thermiques, l'épaisseur t du barreau, sa largeur w dans le plan {100} et l'épaisseur $\xi$ de la couche d'oxyde de silicium ont des valeurs pour lesquelles la dérive thermique de la constante de rappel C du ressort spiral est minimum dans un intervalle de température donné.

9. Procédé pour déterminer les dimensions optimales du ressort spiral selon la revendication 8, **caractérisé en ce qu'**il consiste, successivement, à :

   - exprimer mathématiquement la rigidité du spiral en fonction de son épaisseur t, de sa largeur w modulée dans le plan du spiral, de l'épaisseur $\xi$ de la couche d'oxyde de silicium, de l'anisotropie élastique du silicium et de la température;
   - calculer le comportement thermique, en particulier les deux premiers coefficients ($C_1$, $C_2$) de la constante de rappel du ressort spiral pour toutes les combinaisons de valeurs possibles des paramètres t, w, $\xi$, dans un domaine de température donné; et
   - retenir les combinaisons t, w, $\xi$ pour lesquelles les dérivées thermiques desdits coefficients ($C_1$ et $C_2$) sont minimales.

10. Procédé selon la revendication 9, **caractérisé en ce qu'**il consiste, finalement, à calculer la largeur w du spiral en tout point par la formule :

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

dans laquelle $\bar{s}_{11}$ $\bar{s}_{44}$ $\bar{s}_{12}$ sont les trois coefficients élastiques indépendants du silicium dans les axes cristallographiques.

**Patentansprüche**

**Patentansprüche für folgende Vertragsstaaten : AT, BE, BG, CH, CY, CZ, DK, EE, ES, FI, FR, GB, GR, IE, IT, LI, LU, ML, NL, PT, SE, SK, TR**

1. Zur Ausrüstung der Unruh einer mechanischen Uhr bestimmte Spiralfeder, die aus einem spiralförmigen, durch Ausschneiden aus einer Einkristall-Siliziumplatte {001} erhaltenen Stab (10) gebildet wird, der einen ersten ($C_1$) und einen zweiten ($C_2$) Temperaturkoeffizient der Rückholkonstante C der von ihm gebildeten Spiralfeder aufweist, deren Windungen eine Breite w und eine Dicke t aufweisen, **dadurch gekennzeichnet, dass** der besagte Stab einen Kern (12) aus Silizium und eine diesen Kern aus Silizium umschließende, eine Dicke $\xi$ aufweisende Außenschicht (14) umfasst, die aus einem Material besteht, das einen ersten Temperaturkoeffizienten des Young-Moduls mit einem dem Silizium entgegengesetzten Vorzeichen aufweist.

2. Spiralfeder nach Anspruch 1, **dadurch gekennzeichnet, dass** die besagte Außenschicht (14) aus amorphem Siliziumoxid ($SiO_2$) erzeugt wird.

3. Spiralfeder nach einem der Ansprüche 1 und 2, **dadurch gekennzeichnet, dass** das Maßverhältnis $\xi/w$ so bestimmt ist, dass ein erster Temperaturkoeffizient (C1) ihrer Rückholkonstante C mit einem vorbestimmten Wert erhalten wird.

4. Spiralfeder nach einem der Ansprüche 1 bis 3, **dadurch gekennzeichnet, dass** das Maßverhältnis $\xi/w$ so bestimmt ist, dass der erste Temperaturkoeffizient (C1) ihrer Rückholkonstante C auf ein Minimum reduziert wird.

5. Spiralfeder nach Anspruch 4, **dadurch gekennzeichnet, dass** das Maßverhältnis $\xi/w$ ungefähr 0,06 beträgt.

6. Spiralfeder nach einem der Ansprüche 1 bis 5, **da-**

**durch gekennzeichnet, dass** die Breite des besagten Stabes periodisch in Abhängigkeit des die Orientierung jedes ihrer Punkte in Polarkoordinaten bestimmenden Winkels $\theta$ moduliert ist, um den zweiten Temperaturkoeffizienten ($C_2$) auf ein Minimum zu reduzieren.

7. Spiralfeder nach einem der Ansprüche 1 bis 5, **dadurch gekennzeichnet, dass** die Breite des besagten Stabes so moduliert ist, dass seine örtliche Biegesteifigkeit konstant ist, um den zweiten Temperaturkoeffizienten ($C_2$) auf ein Minimum zu reduzieren.

8. Spiralfeder nach Anspruch 7, **dadurch gekennzeichnet, dass** die Breitenmodulation nach folgender Formel umgesetzt wird :

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

worin $s_{11}$ $s_{44}$ $s_{12}$ die drei unabhängigen Elastizitätskoeffizienten des Siliziums in den kristallographischen Achsen sind.

9. Spiralfeder nach Anspruch 6, **dadurch gekennzeichnet, dass** zur Minimalisierung des ersten ($C_1$) und des zweiten ($C_2$) Temperaturkoeffizienten die Dicke t des Stabes, seine Breite w in der Ebene {100} und die Dicke $\xi$ der Siliziumoxidschicht Werte aufweisen, für welche die Temperaturdrift der Rückholkonstante C der Spiralfeder innerhalb eines gegebenen Zeitintervalls ein Minimum beträgt.

10. Verfahren zur Bestimmung der optimalen Abmessungen der Spiralfeder nach Anspruch 9, **dadurch gekennzeichnet, dass** es darin besteht, nacheinander:

   - die Steifigkeit der Spiralfeder in Abhängigkeit ihrer Dicke t, ihrer in der Spiralebene modulierten Breite w, der Dicke $\xi$ der Siliziumoxidschicht, der elastischen Anisotropie des Siliziums und der Temperatur mathematisch auszudrücken;

   - das Temperaturverhalten, insbesondere der beiden ersten Koeffizienten ($C_1$, $C_2$) der Rückholkonstante der Spiralfeder für alle möglichen Wertekombinationen der Parameter t, w, $\xi$ in einem gegebenen Temperaturbereich zu berechnen; und

   - die Kombinationen von t, w, $\xi$ festzuhalten, für welche die Temperaturdriften der besagten Koeffizienten ($C_1$, $C_2$) minimal sind.

11. Verfahren nach Anspruch 10, **dadurch gekennzeichnet, dass** es schließlich darin besteht, die Breite w der Spiralfeder in jedem Punkt mit der Formel :

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

zu berechnen, worin $s_{11}$ $s_{44}$ $s_{12}$ die drei unabhängigen Elastizitätskoeffizienten des Siliziums in den kristallographischen Achsen sind.

**Patentansprüche für folgenden Vertragsstaaten : DE**

1. Zur Ausrüstung der Unruh einer mechanischen Uhr bestimmte Spiralfeder, die aus einem spiralförmigen, durch Ausschneiden aus einer Einkristall-Siliziumplatte {001} erhaltenen Stab (10) gebildet wird, der einen ersten ($C_1$) und einen zweiten ($C_2$) Temperaturkoeffizient der Rückholkonstante C der von ihm gebildeten Spiralfeder aufweist, deren Windungen eine Breite w und eine Dicke t aufweisen, wobei der besagte Stab einen Kern (12) aus Silizium und eine diesen Kern aus Silizium umschließende, eine Dicke $\xi$ aufweisende Außenschicht (14) umfasst, die aus einem Material besteht, das einen ersten Temperaturkoeffizienten des Young-Moduls mit einem dem Silizium entgegengesetzten Vorzeichen aufweist, **dadurch gekennzeichnet, dass** das Maßverhältnis $\xi/w$ so bestimmt ist, dass ein erster Temperaturkoeffizient (C1) ihrer Rückholkonstante C mit einem vorbestimmten Wert erhalten wird.

2. Spiralfeder nach Anspruch 1, **dadurch gekennzeichnet, dass** die besagte Außenschicht (14) aus amorphem Siliziumoxid ($SiO_2$) erzeugt wird.

3. Spiralfeder nach einem der Ansprüche 1 und 2, **dadurch gekennzeichnet, dass** das Maßverhältnis $\xi/w$ so bestimmt ist, dass der erste Temperaturkoeffizient (C1) ihrer Rückholkonstante C auf ein Minimum reduziert wird.

4. Spiralfeder nach Anspruch 3, **dadurch gekennzeichnet, dass** das Maßverhältnis $\xi/w$ ungefähr 0,06 beträgt.

5. Spiralfeder nach einem der Ansprüche 1 bis 4, **dadurch gekennzeichnet, dass** die Breite des besagten Stabes periodisch in Abhängigkeit des die Orientierung jedes ihrer Punkte in Polarkoordinaten bestimmenden Winkels $\theta$ moduliert ist, um den zweiten Temperaturkoeffizienten ($C_2$) auf ein Minimum zu reduzieren.

**6.** Spiralfeder nach einem der Ansprüche 1 bis 4, **dadurch gekennzeichnet, dass** die Breite des besagten Stabes so moduliert ist, dass seine örtliche Biegesteifigkeit konstant ist, um den zweiten Temperaturkoeffizienten ($C_2$) auf ein Minimum zu reduzieren.

**7.** Spiralfeder nach Anspruch 6, **dadurch gekennzeichnet, dass** die Breitenmodulation nach folgender Formel umgesetzt wird :

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

worin $s_{11}$ $s_{44}$ $s_{12}$ die drei unabhängigen Elastizitätskoeffizienten des Siliziums in den kristallographischen Achsen sind.

**8.** Spiralfeder nach Anspruch 5, **dadurch gekennzeichnet, dass** zur Minimalisierung des ersten ($C_1$) und des zweiten ($C_2$) Temperaturkoeffizienten die Dicke t des Stabes, seine Breite w in der Ebene {100} und die Dicke $\xi$ der Siliziumoxidschicht Werte aufweisen, für welche die Temperaturdrift der Rückholkonstante C der Spiralfeder innerhalb eines gegebenen Zeitintervalls ein Minimum beträgt.

**9.** Verfahren zur Bestimmung der optimalen Abmessungen der Spiralfeder nach Anspruch 8, **dadurch gekennzeichnet, dass** es darin besteht, nacheinander:

- die Steifigkeit der Spiralfeder in Abhängigkeit ihrer Dicke t, ihrer in der Spiralebene modulierten Breite w, der Dicke $\xi$ der Siliziumoxidschicht, der elastischen Anisotropie des Siliziums und der Temperatur mathematisch auszudrücken;
- das Temperaturverhalten, insbesondere der beiden ersten Koeffizienten ($C_1$, $C_2$) der Rückholkonstante der Spiralfeder für alle möglichen Wertekombinationen der Parameter t, w, $\xi$ in einem gegebenen Temperaturbereich zu berechnen; und
- die Kombinationen von t, w, $\xi$ festzuhalten, für welche die Temperaturdriften der besagten Koeffizienten ($C_1$, $C_2$) minimal sind.

**10.** Verfahren nach Anspruch 9, **dadurch gekennzeichnet, dass** es schließlich darin besteht, die Breite w der Spiralfeder in jedem Punkt mit der Formel :

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

zu berechnen, worin $s_{11}$ $s_{44}$ $s_{12}$ die drei unabhängigen Elastizitätskoeffizienten des Siliziums in den kristallographischen Achsen sind.

**Claims**

**Claims for the following Contracting States : AT, BE, BG, CH, CY, CZ, DK, EE, ES, FI, FR, GB, GR, IE, IT, LI, LU, ML, NL, PT, SE, SK, TR**

**1.** A hairspring intended to equip the balance wheel of a mechanical timepiece and in the form of a spiraled rod (10) cut from an {001} single-crystal silicon plate having a first thermal coefficient ($C_1$) and a second thermal coefficient ($C_2$) of its spring constant C, the turns of said hairspring having a width w and a thickness t, **characterized in that** said rod comprises a silicon core (12) and an external layer (14) of thickness $\xi$ formed around the silicon core and made of a material having a first thermal coefficient of the Young's modulus of opposite sign to that of the silicon.

**2.** The hairspring as claimed in claim 1, **characterized in that** said external layer (14) is made of amorphous silicon oxide ($SiO_2$).

**3.** The hairspring as claimed in either of claims 1 and 2, **characterized in that** the dimensional ratio $\xi/w$ is defined so as to obtain a first thermal coefficient ($C_1$) of its spring constant C of predetermined value.

**4.** The hairspring as claimed in one of claims 1 to 3, **characterized in that** the dimensional ratio $\xi/w$ is defined so as to minimize the first thermal coefficient ($C_1$) of its spring constant C.

**5.** The hairspring as claimed in claim 4, **characterized in that** the dimensional ratio $\xi/w$ is about 0.06.

**6.** The hairspring as claimed in one of claims 1 to 5, **characterized in that** the width of said rod is modulated, periodically, as a function of the angle $\theta$ that defines the orientation of each of its points in polar coordinates in order to minimize the second thermal coefficient ($C_2$).

**7.** The hairspring as claimed in one of claims 1 to 5, **characterized in that** the width of said rod is modulated so that its local flexural stiffness is constant in order to minimize the second thermal coefficient

$(C_2)$.

**8.** The hairspring as claimed in claim 7, **characterized in that** the modulation is effected according to the formula:

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

in which $\bar{s}_{11}$, $\bar{s}_{44}$ and $\bar{s}_{12}$ are the three independent elastic coefficients of silicon along the crystallographic axes.

**9.** The hairspring as claimed in claim 6, **characterized in that**, in order to minimize the first thermal coefficient $(C_1)$ and the second thermal coefficient $(C_2)$, the thickness t of the rod, its width w in the {100} plane and the thickness $\xi$ of the silicon oxide layer have values for which the thermal drift of the spring constant C of the hairspring is a minimum within a given temperature range.

**10.** A method for determining the optimum dimensions of the hairspring as claimed in claim 9, **characterized in that** it consists, in succession, in:

- mathematically expressing the stiffness of the hairspring as a function of its thickness t, its width w modulated in the plane of the hairspring, the thickness $\xi$ of the silicon oxide layer, the elastic anisotropy of the silicon and the temperature;
- calculating the thermal behavior, in particular the first two coefficients $(C_1, C_2)$ of the spring constant of the hairspring for all combinations of possible values of the parameters t, w and $\xi$ within a given temperature range; and
- adopting the t, w, $\xi$ combinations for which the thermal drifts of said coefficients $(C_1$ and $C_2)$ are minimal.

**11.** The method as claimed in claim 10, **characterized in that** it consists, finally, in calculating the width w of the spiral at any point from the formula:

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

in which $\bar{s}_{11}$, $\bar{s}_{44}$ and $\bar{s}_{12}$ are the three independent elastic coefficients of silicon along the crystallographic axes.

**Claims for the following Contracting State : DE**

**1.** A hairspring intended to equip the balance wheel of a mechanical timepiece and in the form of a spiraled rod (10) cut from an {001} single-crystal silicon plate having a first thermal coefficient $(C_1)$ and a second thermal coefficient $(C_2)$ of its spring constant C, the turns of said hairspring having a width w and a thickness t, said rod comprising a silicon core (12) and an external layer (14) of thickness $\xi$ formed around the silicon core and made of a material having a first thermal coefficient of the Young's modulus of opposite sign to that of the silicon, **characterized in that** the dimensional ratio $\xi$/w is defined so as to obtain a first thermal coefficient $(C_1)$ of its spring constant C of predetermined value.

**2.** The hairspring as claimed in claim 1, **characterized in that** said external layer (14) is made of amorphous silicon oxide $(SiO_2)$.

**3.** The hairspring as claimed in one of claims 1 to 2, **characterized in that** the dimensional ratio $\xi$/w is defined so as to minimize the first thermal coefficient $(C_1)$ of its spring constant C.

**4.** The hairspring as claimed in claim 4, **characterized in that** the dimensional ratio $\xi$/w is about 0.06.

**5.** The hairspring as claimed in one of claims 1 to 4, **characterized in that** the width of said rod is modulated, periodically, as a function of the angle $\theta$ that defines the orientation of each of its points in polar coordinates in order to minimize the second thermal coefficient $(C_2)$.

**6.** The hairspring as claimed in one of claims 1 to 5, **characterized in that** the width of said rod is modulated so that its local flexural stiffness is constant in order to minimize the second thermal coefficient $(C_2)$.

**7.** The hairspring as claimed in claim 6, **characterized in that** the modulation is effected according to the formula:

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

in which $\bar{s}_{11}$, $\bar{s}_{44}$ and $\bar{s}_{12}$ are the three independent elastic coefficients of silicon along the crystallographic axes.

**8.** The hairspring as claimed in claim 5, **characterized in that**, in order to minimize the first thermal coefficient $(C_1)$ and the second thermal coefficient $(C_2)$,

the thickness t of the rod, its width w in the {100} plane and the thickness ξ of the silicon oxide layer have values for which the thermal drift of the spring constant C of the hairspring is a minimum within a given temperature range.

**9.** A method for determining the optimum dimensions of the hairspring as claimed in claim 8, **characterized in that** it consists, in succession, in:

- mathematically expressing the stiffness of the hairspring as a function of its thickness t, its width w modulated in the plane of the hairspring, the thickness ξ of the silicon oxide layer, the elastic anisotropy of the silicon and the temperature;
- calculating the thermal behavior, in particular the first two coefficients (C1, C2) of the spring constant of the hairspring for all combinations of possible values of the parameters t, w and ξ within a given temperature range; and
- adopting the t, w, ξ combinations for which the thermal drifts of said coefficients (C1 and C2) are minimal.

**10.** The method as claimed in claim 9, **characterized in that** it consists, finally, in calculating the width w of the spiral at any point from the formula:

$$w = w_0 \sqrt[3]{1 - \frac{1 - \frac{\bar{s}_{12.0}}{\bar{s}_{11.0}} - \frac{1}{2}\frac{\bar{s}_{44.0}}{\bar{s}_{11.0}}}{2} \sin^2(2\theta)}$$

in which $\bar{s}_{11}$, $\bar{s}_{44}$ and $\bar{s}_{12}$ are the three independent elastic coefficients of silicon along the crystallographic axes.

Figure 1

Figure 2a

Figure 2b

$E_0^{(a)}$ $E_1^{(a)}$ $E_2^{(a)}$

## Figure 3